# EUROPEAN PATENT SPECIFICATION

(11) **EP 0 940 736 B1**
(45) Date of publication and mention of the grant of the patent: **03.07.2002**
(21) Application number: 99200173.5
(22) Date of filing: 21.01.1999
(51) Int. Cl.: G05B 19/23, H02P 7/00

(54) **Electronic control system with radio remote control setting of limit stops for motors for the operation of winding devices, such as roller shades, roller shutters, rolling gates and similar**
Elektronisches Kontrollsystem mit funk-fernsteuerbarer Einstellung der Endabschaltungen für Motoren von Aufrollvorrichtungen, w. z. B. Markisen, Rolläden, Rolltoren oder ähnliches
Système de commande avec réglement d'arrêts automatiques à distance par radio pour dispositifs d'enroulement motorisés tels que stores, volets roulants, portes roulantes ou autres

(30) Priority: 05.05.1998 IT MI980963
(43) Date of publication of application: 08.09.1999
(73) Proprietor: Jolly Motor International S.p.A., 38068 Rovereto (IT)
(72) Inventor: Omenigrandi, Marco, 38068 Rovereto (TN) (IT)
(74) Representative: Mittler, Enrico

(56) References cited:
- WO-A-96/39740
- WO-A-97/12109
- US-A- 4 638 433
- US-A- 5 278 480
- PALCOM, SL-7900RP, 500 Kanal HiFi-Stereo Satellitenreceiver, Manual, 10.01.1996, PALCOM ELECTRONICS CORPORATION, 4-8-13 Fujieda, Fujieda-shi, Shizuoka-ken, JAPAN 426, Tel.:++81 54 643 4807, Fax:++81 54 644 4405, pages 1 - 35, XP002129393

## Description

The present invention refers to an electronic control system for motors for the operation of winding devices, such as roller shades, roller shutters, rolling gates and similar, comprising a radio receiver controlled by a radio transmitter. US 4,638,433 A shows such a system.

In the last few years the custom to use electric controls for the opening and closing movements of roller shutters has been increasingly spreading, especially with the metallic ones, more resistant to force opening but also much heavier than the wooden or plastic ones.

A reversible tubular electric ratiomotor having proper power and speed is therefore applied inside the rotating drum onto which the shutter is winding and a pair of push-button power switches is provided to allow the user to control from the ground the operation of the ratiomotor in one sense or in the other for the corresponding movement of the roller shutter opening or closing.

The end of the opening or closing movement was originally determined by the simple release of the button being pressed, but has subsequently been made automatic by the employment of suitable limit stops associated with the winding drum.

Afterwards there has been a shift to the electronic control of the movement, that is obtained by inserting in the tubular motor an encoder that generates impulses at each prefixed angle of rotation of the drum and also by providing a push-button control panel provided with memory, that by gathering and counting the impulses transmitted by the encoder, allows to memorise desirable limit stop positions at first and then to control in a repetitive way the opening and closing movements of the roller shutter up to the aforementioned limit stop positions.

Possible positioning errors at the end of the opening or closing movement, due to the inevitable inertia of the shutter at the end of the movement and to the possibility of a settling re-descent, can be automatically compensated by electronic control systems for roller shutters, as described for example in EP-A-0671676.

These electronic remote control systems that provide for a radio receiver associated with each winder operating motor and preferably included therein and a portable radio transmitter available to the user on the ground are particularly appreciated.

In such a case, each radio transmitter must have its own identification code that is stored in and can therefore be recognised by the purposely enabled receiver only so as to grant a high safety level to the winding system.

An example of remote control system for transmitting and receiving codified signals that allows the desired dialog univocality between the transmitter and the receiver and, by storing the identification code in the receiver by self-learning, avoids any necessity to physically accede to the receiver, is described in the Italian patent application n. VE97A00021, filed on 06/06/1997 in the name of TELECO AUTOMATION s.r.l..

The usefulness of this system is however limited to enable the transmitters to the control of the respective receivers, while no solution is provided for the setting of the limit stops, which has to be carried out manually, by uncomfortable access to the receiver associated with the winder drum.

In view of the described state of the art, a first object of the present invention is to provide an electronic control system for roller shutters and roller shades, comprising a radio receiver and a radio transmitter, that would allow the remote controlled setting of the limit stops position.

A second object of the present invention is to provide an electronic control system for a plurality of winding devices, each provided with a radio receiver, in which a single radio transmitter is enabled to operate simultaneous remote control of all said winding devices.

According to the present invention, the first object is obtained by an electronic control system for motors for the operation of winding devices, such as roller shades, roller gates, rolling shutters and similar, comprising a radio receiver included in the controlled motor and a portable radio transmitter available to the user, wherein the radio transmitter comprises at least two push-buttons for the control of the lifting and lowering movement of the winding device, a radio signal transmitting section provided with an antenna, and a first micro-controller with a first code memory that, at each pressure on at least one of the control push-buttons, sends a codified signal having a respective identification code of the push-button being pressed to the transmitting section, and wherein the radio receiver comprises a radio signal receiving section provided with an antenna and being suitable to receive the codified signal being transmitted through the transmitting section of the radio transmitter, and a second micro-controller with a second code memory, that at each received signal having one of the codes of the second memory generates a control signal for a control unit provided with a third memory that, upon reception of the control signal, starts the motor in one sense of rotation or in the opposite sense according to the identity of the radio-transmitter push-button being pressed and receives identification data of the rotation angle from an encoder coupled to the motor, so as to allow the rotation of the motor itself up to reach a prefixed limit stop, characterized in that, in order to allow the electronic setting of the position of the lifting and lowering limit stops of the winding device, the first micro-controller is programmed in such a way as to generate a first or second codified signal depending on whether a first or second of said control push buttons is pressed, and the second micro-controller is programmed in such a way that, when receiving one of said first or second codified signal, it causes the generation of a first control signal for driving the motor until a first position of limit stop is reached and an information on the limit stop position generated by the encoder is memorised in said third memory and associated with the pressed push-button that has generated said codified signal, so that subsequently, each time that such push-button gets pressed, the system is ready to have the winding device automatically execute the desired movement up to the programmed limit stop position, the aforementioned sequence being repeated for the setting of a second limit stop position corresponding to the pressure on the other one of said first or second push-buttons.

According to another aspect of the present invention the second object is obtained by an electronic control system for motors for the operation of winding devices, such as roller shades, roller gates, rolling shutters and similar, comprising a plurality of radio receivers included in respective controlled motors and a portable radio transmitter available to the user, wherein the radio transmitter comprises at least two push-buttons for the control of the lifting and lowering movement of the winding device, a radio signal transmitting section provided with an antenna, and a first micro-controller provided with a first code memory that, at each pressure on at least one of the control push-buttons, sends a codified signal having a respective identification code of the push-button being pressed to the transmitting section, and wherein each radio receiver comprises a radio signal receiving section provided with an antenna and being suitable to receive the codified signal being transmitted through the transmitting section of the radio transmitter, and a second micro-controller provided with a second code memory, that at each received signal having one of the codes of the second memory generates a control signal for a control unit provided with a third memory that, upon reception of the control signal, starts the motor in one sense of rotation or in the opposite sense according to the identity of the radio transmitter push-button being pressed and receives identification data of the rotation angle from an encoder coupled to the motor, so as to allow the rotation of the motor itself up to reach a prefixed limit stop, characterized in that the radio transmitter comprises a further push-button connected to the first micro-controller to cause it to generate a radio receiver enabling codified signal and third and fourth push-buttons connected to the first-micro-controller to generate a further codified signal for centralised control of a plurality of radio receivers.

The features and advantages of the present invention will be made evident by the following detailed description of an embodiment thereof, that is illustrated as a non limiting example in the enclosed drawings, in which:
Figure 1 schematically shows the functional block diagram of a radio transmitter according to the present invention;
Figure 2 schematically shows the functional block diagram of a radio receiver according to the present invention;
Figure 3 represents in a schematic way the functional block diagram of a radio receiver unit included in Figure 2
Figure 4 represents the external structure of a radio transmitter according to the present invention;
Figure 5 shows the same radio transmitter of Figure 4, with open access to a battery.

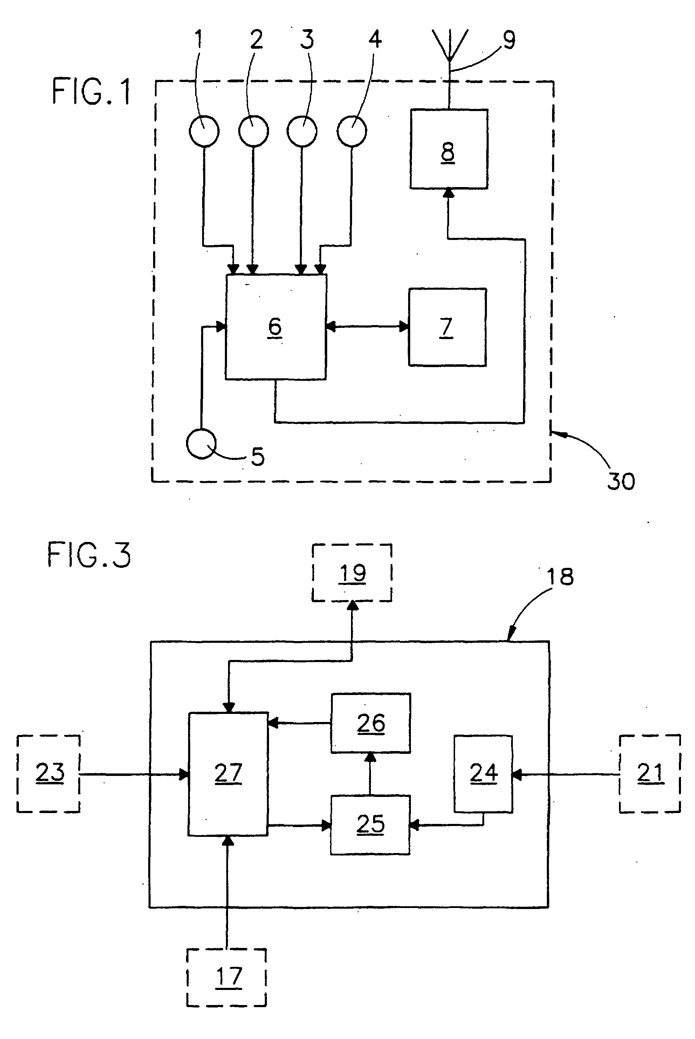

In Figure 1 the block diagram of a radio transmitter 30 according to the present invention is rendered in a schematic way: There are provided four push-buttons 1, 2, 3 and 4, corresponding to an equal number of channels, the first two purposed to the individual control respectively of lifting and lowering, and the other two destined to centralised controls. The aforesaid channels 1, 2, 3 and 4 are connected with a micro-controller 6, that is connected in a biunivocal way to a memory 7 containing identification codes memorised by the supplier, and connected, in addition, to a signal transmitting section 8 comprising an antenna 9. In addition, a receiver enabling push-button 5 connected with the micro-controller 6 is provided.

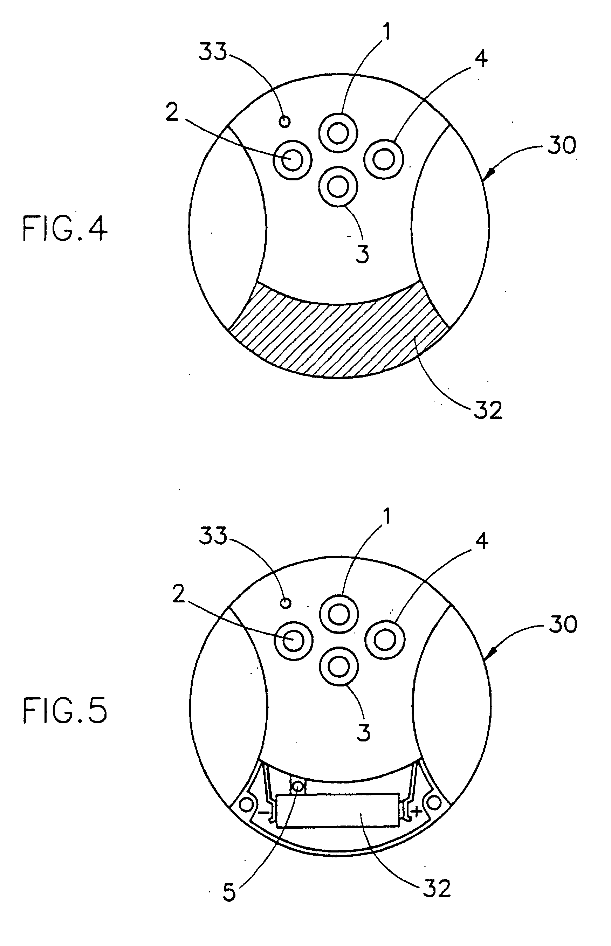

In Figures 4 and 5 a radio transmitter 30 as it appears to the user is shown, in which the two lifting and lowering push-buttons 1 and 2, the two centralisation push-buttons 3 and 4 and a red LED radio emission signaller 33 are present. In Figure 4 there is a lid 31 for closing the power supply space, while in Figure 5 the same lit has been removed and therefore a supply battery 32 and the receiver enabling push-button 5 are visible.

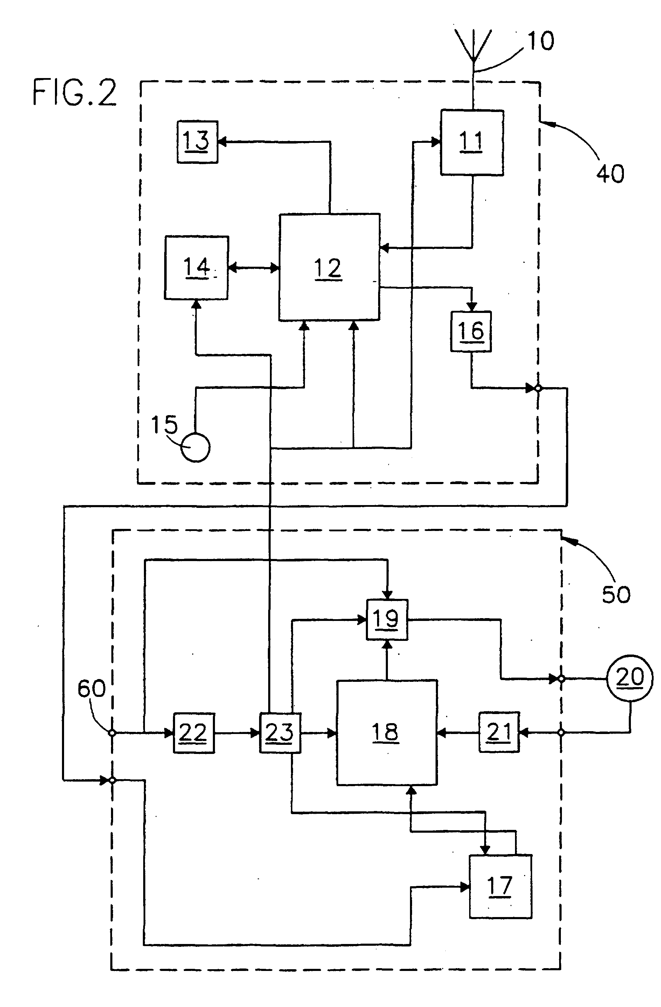

Figure 2 represents the block diagram of a radio receiver according to the present invention, divided into two main functional blocks 40 and 50, respectively a radio receiver and a power block. In the control block 40 there are a signal receiving section 11 with a relative antenna 10, a micro-controller 12 which receives signals from the receiving section 11 and is connected in a biunivocal way with a RAM memory 14, an acoustic signaller 13 that is piloted by the micro-controller 12, an amplifier 16 located at the output of the control block 40, and finally a push-button 15 for cancellation of the RAM memory 14.

Downstream from the control block 40, and in particular from the amplifier 16, a power block 50 is connected, that comprises a decoding receiver 17 that is connected to a control unit 18, that pilots in turn a power device 19 connected to a ratiomotor 20 destined to the bi-directional operation of the winding shutter or shade. In addition an encoder 21 is provided that is physically associated with the ratiomotor 20 in the way described in EP-A-0671676 and is functionally interposed between the ratiomotor 20 and the control unit 18: The encoder 21 is also preferably of the type capable to detect the sense of rotation of the ratiomotor 20, and therefore of the winding drum of the winding shutter or shade, as also described in EP-A-0671676. A rectifier 22 and a stabiliser 23, downstream from it, provide an appropriate power supply to the micro-controller 12, to the RAM memory 14, to the receiving section 11, to the control unit 18, to the power device 19 and to the decoding receiver 17, getting it from a mains terminal.

In Figure 3 a functional block scheme of the control unit 18 is schematically shown, in which the proper connections with the external blocks are also rendered: internally, the unit 18 is subdivided into a counter block 24, which receives signals from the encoder 21 and is connected to a non-volatile memory EEPROM 25, a comparator block 26, which receives signals from the memory 25 and conveys them to a micro-controller 27, the latter being connected to the remaining external blocks and to the same memory 25.

The control system according to the invention is therefore composed of a radio receiver 40, 50, mounted on the stationary structure of the winding device and, particularly, within the ratiomotor, and of a portable radio transmitter 30 with which it is possible to remotely control the radio receiver and therefore the ratiomotor 20. Each transmitter has four normal-use channels that are operated by the four push-buttons 1-4: such push-buttons are utilisable to control the two senses of movement (lifting and lowering) of the single ratiomotor (push-buttons 1 and 2) and to control the two senses of movement of other ratiomotors in a centralised way (push-buttons 3 and 4).

Through the radio transmitter 30 it is also possible to effect the setting of the limit stop points of the device being operated (roller shutter or roller shade), to enable and cancel more transmitters with regards to a receiver element.

According to the application for Italian patent n. VE97A000021 mentioned above, each transmitter sends commands to a receiver by using a signal characterised by an emission code having a determined protocol (for example made up of 66 bits), which is changed at each transmission in a random way (Rolling-code system). Each transmitter also has its own identification code that is recognisable only by the enabled receiver, which code characterises the enabled receiver from others.

Each control system according to the invention, as already said consisting of a transmitter and a receiver, is destined to be supplied to the user with the transmitter buttons 1 and 2 enabled only, which control lifting and lowering of the winding shutter. First of all it is necessary to carry out setting of the limit stop positions and to this purpose the following operative stages must be performed:
a) the push-buttons 1 and 2 of the radio transmitter must be pressed simultaneously for a certain period of time (for example 15 seconds) and the micro-controller 6 immediately sends signals to the memory 7 which contains the relative codes and in turn sends instructions to the micro-controller 6; through the transmitting section 8, the latter sends a codified radiofrequency signal to the control block 40, that is tuned with its receiving section 11 at the same frequency of transmission, in order to be conveyed to the micro-controller 12 which activates the sound signaller 13 in such a way that it produces a sound uninterruptedly for the entire aforesaid period of time. The micro-controller 12 also sends, through the amplifier stage 16 and the decoder receiver 17, a control signal to the control unit 18, which informs it that at the end of the 15 seconds it must zero the entire EEPROM memory 25. In this way, the system is ready for the limit stop information to be set in the EEPROM memory 25.
b) Once the two push-buttons 1 and 2 are released, only one of the two previous push-buttons must be pressed (for example the push-button 1 corresponding to the lifting movement) until the desired (upper) limit stop position is reached and then it must be released. When pressing the push-button 1, the micro-controller 6 is activated and sends signals to the memory 7, which contains codes relative to the channel being activated, and it receives instructions therefrom and then sends a codified signal to the receiver through the section 8; the micro-controller 12 informs the control unit 18 of the signal being received, and the latter pilots the power device 19 which in turn activates the ratiomotor 20 and the winding shutter is lifted. The encoder 21 reads the pitches of the ratiomotor 20 and sends pulses to the unit 18 that through the function 24 starts to count them until the button 1 is released and the movement of the ratiomotor stops.
c) At this point the buttons 1 and 2 must be simultaneously pressed again for a determined interval of time (for example more than 1 second) and then, once they are released, the lifting button 1 must be immediately pressed (within 0.25 seconds) for a certain time, for example more than 1 second. In this way the information on the number of pulses that is generated by the encoder 21 is memorised in the EEPROM memory 25 and in addition such information gets associated with the lifting button 1 in such a way that subsequently each time the push-button 1 gets pressed, the system is ready to execute in a repetitive and automatic way the opening (lifting) movement of the winding shutter up to the programmed limit stop position.

With these operations the upper limit stop position is memorised and in order to memorise the lower one too, it is necessary to press the (lowering) button 2 until the desired limit stop position is reached, to release it, to press simultaneously the buttons I and 2 for a time longer than 1 second, then to release them and finally to immediately press (within 0.25 seconds) the lowering push-button 2 for a time longer than 1 second: in an analogous way as before, the information relative to the upper limit stop position is memorised in the memory 25, so that at each subsequent command of the press-button 2 the mobile element automatically reaches the aforesaid lower limit stop point.

At this point the transmitter is capable to control the lifting and the lowering of the roller shutter until the automatic arrest at the relative limit stop: for example, by pressing the lifting push-button 1, the micro-controller 6, through the transmitting section 8, sends a codified signal to the control block 40 and therefore the micro-controller 12 is programmed in order to transmit a control signal to the power block 50 in which the control unit 18 is predisposed in such a way so as to activate the power device 19 and to obtain the relative movement of the ratiomotor 20; the number of pulses generated by the encoder 21 and associated with the movement of the ratiomotor 20 is then counted by the block 24 and compared, by means of the block 26, with the information stored in the memory 25, indicating the limit stop position, and in the instance in which the two data become equal, the micro-controller 27 automatically stops the ratiomotor 20 and the winding shutter has reached the desired limit stop position.

If one wishes to enable also the two channels 3 and 4 devoted to the centralised control of more receivers associated with respective winding shutters, one must proceed in the following way:
a) in the first stage, in order to enable a determined receiver, the push-button 5 is pressed for an interval of time within which the micro-controller 6 sends a codified signal to the receiver by means of sections 8 and 11; the codified signal is memorised in the RAM memory 14 and the micro-controller 12 activates the sound signaller 13 in order to produce a continuous sound; in this way the receiver is enabled to memorise an additional channel in its RAM memory 14;
b) within a determined period of time (for example 5 seconds) from the beginning of the sound signal, it is necessary to press the push-button of the channel to be memorised in the memory 14, for example the push-button 3; the confirm of the memorisation being done is signalised by a change in the sound produced by the sound signaller 13;
c) in order to memorise the last channel remaining to be memorised it is necessary to repeat what described in the aforementioned points, in this case by pressing the push-button 4.

The same operation is to be repeated for all the other receivers intended for the centralised control by the same transmitter.

For the memorisation of channels 1 and 2 and/or channels 3 and 4 of an additional transmitter, for example that arrives new from the supplier, in a system according to the present invention, provided only with its own transmitter, it is necessary to carry out, for each channel of each transmitter to be added, the same operations just described for the memorisation of the centralised control channels 3 and 4.

Each receiver can, for example, memorise 64 channels and therefore it is possible to associate a maximum of 32 transmitters with centralised control channels 3 and 4, or 16 transmitters with four channels 1, 2, 3 and 4.

In order to cancel the channels of an additional transmitter or the channels 3 and 4 of the main transmitter it is necessary to carry out the following operations for each channel: the button 5 must be pressed for a certain number of times at regular intervals, within a determined period of time (for example for three times within 5 seconds), and in this way from the transmitter 30 to the receiver a codified signal is sent that reaches the micro-controller 12, which activates the sound signaller 13 in such a way that it produces a sound slowly and intermittently, and in addition it predisposes the RAM memory 14 so that some of its locations, relative to certain channels, get cancelled. The subsequent pressure on the push-button of the channel that is intended to be cancelled, within a prefixed time interval (for example 5 seconds) from the beginning of the sound signal, produces the cancellation of the locations in the RAM memory 14, exactly relative to that determined channel, in such a way that at each subsequent command given with the push-button of the channel that has been cancelled, the micro-controller 12, which gets the relative codified signal from the transmitter 30, does not receive any instruction from the RAM memory 14 and the power block 50 does not get piloted and therefore the ratiomotor 20 does not get activated.

## Claims

1. Electronic control system for motors for the operation of winding devices, such as roller shades, roller gates, rolling shutters and similar, comprising a radio receiver (40, 50) included in the motor being controlled and a portable radio transmitter (30) available to the user, wherein said radio transmitter (30) comprises at least two push-buttons (1, 2) for the control of the lifting and lowering movement of the winding device, a radio signal transmitting section (8) provided with an antenna (9), and a first micro-controller (6) with a first code memory (7) that, at each pressure on at least one of said control push-buttons (1, 2), sends a codified signal having a respective identification code of the push-button being pressed to said transmitting section (8), and wherein said radio receiver (40, 50) comprises a radio signal receiving section (11) provided with an antenna (10) and being suitable to receive the codified signal being transmitted by said radio transmitter (30) through said transmitting section (8), and a second micro-controller (12) with a second code memory (14), that at each received signal having one of the codes of said second memory (14) generates a control signal for a control unit (18) provided with a third memory (25) that, upon reception of said control signal, starts said motor in one sense of rotation or in the opposite sense according to the identity of the push-button of said radio transmitter (30) being pressed and receives identification data of the angle of rotation of the motor from an encoder (21) coupled to the motor, so as to allow the rotation of the motor itself until a prefixed limit stop is reached, **characterised in that**, in order to allow the electronic setting of the position of the lifting and lowering limit stops of the winding device, said first micro-controller (6) is programmed in such a way so as to generate a first or second codified signal depending on whether a first (1) or second (2) control push buttons is pressed, and said second micro-controller (12) is predisposed in such a way that, when receiving one of said first or second codified signal, it causes the generation of a first control signal for driving the motor until a first position of limit stop is reached and an information on the limit stop position generated by said encoder (21) is memorised in said third memory (25) and associated with the pressed push-button that has generated said codified signal, so that subsequently, each time that such push-button gets pressed, said system is ready to have the winding device automatically execute the desired movement up to the programmed limit stop position, the aforementioned sequence being repeated for the setting of a second limit stop position corresponding to the operation of the other one of said first or second push-button (1,2).

2. Electronic control system according to claim 1, **characterised in that** said first micro-controller (6) is programmed so that a third codified signal initially generated by simultaneous depression of said first and second push-buttons (1, 2) and maintained for said first prefixed interval of time causes said micro-controller (6) to generate a zeroing signal for said third memory (25) and repetition of said third codified signal for a second prefixed interval of time after said first or second codified signal followed by repetition of said first or second codified signal for a third prefixed interval of time causes said first micro-controller (6) to generate a second control signal for said second micro-controller (12) to memorise said information on the limit stop position generated by the encoder (21) in said third memory (25).

3. Electronic control system according to claim 1 or 2, **characterised in that** said radio transmitter (30) also comprises at least two centralised control push-buttons (3, 4) and a receiver enabling push-button (5) which are connected to said first micro-controller (6) so that depression of said receiver enabling push button (5) and subsequent depression of one of the two centralised control push-buttons (3, 4) of the same radio transmitter or of one among the two lifting and lowering control push-buttons (1, 2) or the two centralised control buttons (3, 4) of another radio transmitter within a fourth prefixed interval of time causes generation of a further codified signal for said second micro-controller (12) to memorise an identification code of the push-button being pressed in said second memory (14).

4. Electronic control system according to claim 3, **characterised in that** simultaneous depression of said receiver enabling push-button (5) for a prefixed number of times and subsequent depression one of the two centralised control push-buttons (3, 4) of the same radio transmitter or of one among the two lifting and lowering control push-buttons (1, 2) or the two centralised control buttons (3, 4) of another radio transmitter within said fourth prefixed interval of time cause generation of an additional codified signal for said second micro-controller (12) to cancel the identification code of the push-button being pressed in said second memory (14).

5. Electronic control system according to any one of the previous claims, **characterised in that** said radio receiver (40, 50) comprises a cancellation button (15) for manual cancellation of said second memory (14).

6. Electronic control system according to any one of the previous claims, **characterised in that** said radio receiver (40, 50) comprises an amplifier stage (16) at the output of said second micro-controller (12).

7. Electronic control system according to any one of the previous claims, **characterised in that** said radio receiver (40, 50) comprises a decoding receiver (17) for receiving said control signals from said second micro-controller (12) and to send them properly decoded to said control unit (18).

8. Electronic control system according to any one of the previous claims, **characterised in that** said radio receiver (40, 50) comprises a rectifier (22) and a stabiliser (23), downstream from it, which provide for a suitable power supply to the radio receiver (40, 50).

9. Electronic control system according to any one of the previous claims, **characterised in that** said radio receiver (40, 50) comprises a sound signaller (13) and controlled by said second micro-controller (12) to deliver a prefixed sound each time that said micro-controller (12) receives an appropriate codified signal for a prefixed interval of time.

10. Electronic control system for motors for the operation of winding devices, such as roller shades, roller gates, rolling shutters and similar, comprising a radio receiver (40, 50) included in the motor being controlled and a portable radio transmitter (30) available to the user, wherein said radio transmitter (30) comprises at least two push-buttons (1, 2) for the control of the lifting and lowering movement of the winding device, a radio signal transmitting section (8) provided with an antenna (9), and a first micro-controller (6) provided with a first code memory (7) that, at each pressure on at least one of said control push-buttons (1, 2), sends a codified signal having a respective identification code of the push-button being pressed to said transmitting section (8), and wherein said radio receiver (40, 50) comprises a radio signal receiving section (11) provided with an antenna (10) and being suitable to receive the codified signal being transmitted by said radio transmitter (30) through said transmitting section (8), and a second micro-controller (12) with a second code memory (14), that at each received signal having one of the codes of said second memory (14) generates a control signal for a control unit (18) provided with a third memory (25) that, upon reception of said control signal, starts said motor in one sense of rotation or in the opposite sense according to the identity of the push-button of said radio transmitter (30) being pressed and receives identification data of the angle of rotation of the motor from an encoder (21) coupled to the motor, so as to allow the rotation of the motor itself until a prefixed limit stop is reached, **characterised in that** the radio transmitter (30) comprises a further push-button (5) connected to the first micro-controller (6) to cause it to generate a radio receiver enabling codified signal and third and fourth push-buttons (3, 4) connected to the first-micro-controller (6) to generate a further codified signal for centralised control of a plurality of radio receivers (40, 50).

11. Electronic control system according to claim 10, **characterised in that** said centralised control push-buttons (3, 4) and said receiver enabling push-button (5) are connected to said first micro-controller (6) so that depression of said receiver enabling push button (5) causes generation of said receiver enabling codified signal and subsequent depression of one of the two centralised control push-buttons (3, 4) of the same radio transmitter or of one among the two lifting and lowering control push-buttons (1, 2) or the two centralised control buttons (3, 4) of another radio transmitter within a prefixed interval of time causes generation of said further codified signal and memorisation of an identification code of the push-button being pressed in said second memory (14).

12. Electronic control system according to claim 11, **characterised in that** simultaneous depression of said receiver enabling push-button (5) for a prefixed number of times and subsequent depression of one of the two centralised control push-buttons (3, 4) of the same radio transmitter or of one among the two lifting and lowering control push-buttons (1, 2) or the two centralised control buttons (3, 4) of another radio transmitter within said prefixed interval of time causes generation of an additional codified signal for said second micro-controller (12) to cancel the identification code of the push-button being pressed in said second memory (14).

13. Electronic control system according to any one of the previous claims, **characterised in that** said radio receiver (40, 50) comprises a cancellation button (15) for manual cancellation of said second memory (14).

14. Electronic control system according to any one of the previous claims, **characterised in that** said radio receiver (40, 50) comprises an amplifier stage (16) arranged at the output of said second micro-controller (12).

15. Electronic control system according to any one of the previous claims, **characterised in that** said radio receiver (50) comprises a decoding receiver (17) for receiving said control signals from said second micro-controller (12) and to send them properly decoded to said control unit (18).

16. Electronic control system according to any one of the previous claims, **characterised in that** said radio receiver (40, 50) comprises a rectifier (22) and a stabiliser (23), downstream from it.

17. Electronic control system according to any one of the previous claims, **characterised in that** it comprises a sound signaller (13) included in said radio receiver (40, 50) and controlled by said second micro-controller (12) to deliver a prefixed sound each time that said micro-controller (12) receives an appropriate codified signal for a prefixed interval of time.

## Patentansprüche

1. Elektronisches Steuersystem für Motoren zum Betätigen von Aufwickelvorrichtungen wie z.B. Markisen, Rolltoren, Rolläden und dergleichen, umfassend einen Funkempfänger (40, 50), der in dem gesteuerten Motor enthalten ist, und einen tragbaren Funksender (30), der dem Benutzer zur Verfügung steht, wobei der Funksender (30) mindestens zwei Drucktasten (1, 2), zum Steuern der Anhebe- und Absenkbewegung der Aufwickelvorrichtung aufweist, ein Funksignalsendeteil (8), ausgestattet mit einer Antenne (9), und einen ersten Mikrocontroller (6) mit einem ersten Codespeicher (7), der bei jedem Drücken mindestens einer der Steuerdrucktasten (1, 2) ein codiertes Signal mit einem zugehörigen Kennungscode der gedrückten Drucktaste an den Sendeteil (9) sendet, und wobei der Funkempfänger (40, 50) einen Funksignal-Empfangsteil (11) aufweist, bestückt mit einer Antenne (10) und geeignet zum Empfang des von dem Funksender (30) über den Sendeteil (8) gesendeten Signals, und einen zweiten Mikrocontroller (12) mit einem zweiten Codespeicher (14), der bei jedem empfangenen Signal mit einem der Codes des zweiten Speichers (14) ein Steuersignal für eine Steuereinheit (18) erzeugt, die mit einem dritten Speicher (25) ausgestattet ist, der bei Empfang des Steuersignals den Motor in die eine Drehrichtung oder in die entgegengesetzte Richtung nach Maßgabe der Identität der gedrückten Drucktaste des Funksenders (30) startet und Kennungsdaten des Drehwinkels des Motors von einem mit diesem gekoppelten Codierer (21) empfängt, so daß die Drehung des Motors ermöglicht wird, bis eine vorab festgelegte Grenze erreicht ist, **dadurch gekennzeichnet, daß**, damit die elektronische Einstellung für die Anhebe- und Absenkgrenzen der Aufwickelvorrichtung möglich ist, der erste Mikrocontroller (6) in der Weise programmiert ist, daß er abhängig davon ein erstes oder ein zweites codiertes Signal erzeugt, ob eine erste (1) oder eine zweite (2) Steuerdrucktaste gedrückt wird, und der zweite Mikrocontroller (12) in der Weise voreingestellt wird, daß, wenn eines von dem ersten oder dem zweiten codierten Signal empfangen wird, er die Erzeugung eines ersten Steuersignals veranlaßt, um den Motor so weit zu treiben, bis eine erste Grenze erreicht ist, und eine Information über die Grenzstelle, generiert von dem Codierer (21), in dem dritten Speicher (25) und in Zuordnung zu der gedrückten Drucktaste, die das codierte Signal erzeugt hat, abgespeichert wird, so daß später jedesmal dann, wenn diese Drucktaste gedrückt wird, das System bereit ist, damit die Aufwickelvorrichtung automatisch die gewünschte Bewegung bis hin zu der programmierten Grenzstelle ausführt, wobei der obige Ablauf zum Einstellen der zweiten Grenzstelle entsprechend dem Betriebsablauf der anderen von der ersten oder der zweiten Drucktaste (1, 2) wiederholt wird.

2. Elektronisches Steuersystem nach Anspruch 1, **dadurch gekennzeichnet, daß** der erste Mikrocontroller (6) derart programmiert ist, daß ein drittes codiertes Signal anfänglich erzeugt wird durch gleichzeitiges Niederdrücken der ersten und der zweiten Drucktaste (1, 2), und das Halten in dem ersten vorab festgelegten Zeitintervall den Mikrocontroller (6) veranlaßt, ein auf Null gehendes Signal für den dritten Speicher (25) zu erzeugen, und ein Wiederholen des dritten codierten Signals für ein zweites vorab festgelegtes Zeitintervall nach dem ersten oder dem zweiten codierten Signal, gefolgt von einer Wiederholung des ersten oder des zweiten codierten Signals für eine dritte vorab festgelegte Zeitspanne den ersten Mikrocontroller (6) veranlaßt, eine zweites Steuersignal für den zweiten Mikrocontroller (12) zu erzeugen, damit dieser die von dem Codierer (21) generierte Information über die Grenzstelle in dem dritten Speicher (25) abspeichert.

3. Elektronisches Steuersystem nach Anspruch 1 oder 2, **dadurch gekennzeichnet, daß** der Funksender (30) außerdem mindestens zwei zentralisierte Steuerdrucktasten (3, 4) und eine Empfängerfreigabe-Drucktaste (5) enthält, die mit dem ersten Mikrocontroller (6) gekoppelt sind, so daß ein Niederdrükken der Empfängerfreigabe-Drucktaste (5) und ein anschließendes Niederdrücken von einer der beiden zentralisierten Steuerdrucktasten (3, 4) desselben Funksenders oder von einer der beiden Anhebe- und Absenk-Steuerdrucktasten (1, 2) oder der beiden zentralisierten Steuertasten (3, 4) eines anderen Funksenders innerhalb eines vierten vorab festgelegten Zeitintervalls die Erzeugung eines weiteren codierten Signals für den zweiten Mikrocontroller (12) veranlaßt, damit dieser einen Kennungscode für die gedruckte Drucktaste in dem zweiten Speicher (14) abspeichert.

4. Elektronisches Steuersystem nach Anspruch 3, **dadurch gekennzeichnet, daß** das gleichzeitige Niederdrücken der Empfängerfreigabe-Drucktaste (5) mit einer vorab festgelegten Häufigkeit und das anschließende Niederdrücken von einer der beiden zentralisierten Steuerdrucktasten (3, 4) desselben Funksenders oder von einer der beiden Anhebe- und Absenk-Steuerdrucktasten (1, 2) oder der beiden zentralisierten Steuertasten (3, 4) eines anderen Funksenders in dem vierten vorab festgelegten Zeitintervall die Erzeugung eines zusätzlichen codierten Signals für den zweiten Mikrocontroller (12) veranlaßt, damit dieser den Kennungscode für die niedergedrückte Drucktaste in dem zweiten Speicher (14) löscht.

5. Elektronisches Steuersystem nach einem der vorhergehenden Ansprüche, **dadurch gekennzeichnet, daß** der Funkempfänger (40, 50) eine Löschtaste (15) zum manuellen Löschen des zweiten Speichers (14) aufweist.

6. Elektronisches Steuersystem nach einem der vorhergehenden Ansprüche, **dadurch gekennzeichnet, daß** der Funkempfänger (40, 50) eine Verstärkerstufe (16) am Ausgang des zweiten Mikrocontrollers (12) aufweist.

7. Elektronisches Steuersystem nach einem der vorhergehenden Ansprüche, **dadurch gekennzeichnet, daß** der Funkempfänger (40, 50) einen decodierenden Empfänger (17) aufweist, um die Steuersignale von dem zweiten Mikrocontroller (12) zu empfangen und sie korrekt dekodiert an die Steuereinheit (18) zu senden.

8. Elektronisches Steuersystem nach einem der vorhergehenden Ansprüche, **dadurch gekennzeichnet, daß** der Funkempfänger (40, 50) einen Gleichrichter (22) und einen stromabwärts von diesem angeordneten Stabilisierer (23) aufweist, die für eine geeignete Stromversorgung des Funkempfängers (40, 50) sorgen.

9. Elektronisches Steuersystem nach einem der vorhergehenden Ansprüche, **dadurch gekennzeichnet, daß** der Funkempfänger (40, 50) einen Tonsignalgeber (13) aufweist, und von dem Mikrocontroller (12) so gesteuert wird, daß ein vorab festgelegter Ton jedesmal dann geliefert wird, wenn der Mikrocontroller (12) ein passend codiertes Signal über eine vorab festgelegte Zeitspanne hinweg empfängt.

10. Elektronisches Steuersystem für Motoren zum Betätigen von Aufwickelvorrichtungen wie z.B. Markisen, Rolltoren, Rolläden und dergleichen, umfassend einen Funkempfänger (40, 50), der in dem gesteuerten Motor enthalten ist, und einen tragbaren Funksender (30), der dem Benutzer zur Verfügung steht, wobei der Funksender (30) mindestens zwei Drucktasten (1, 2), zum Steuern der Anhebe- und Absenkbewegung der Aufwickelvorrichtung aufweist, ein Funksignalsendeteil (8), ausgestattet mit einer Antenne (9), und einen ersten Mikrocontroller (6) mit einem ersten Codespeicher (7), der bei jedem Drücken mindestens einer der Steuerdrucktasten (1, 2) ein codiertes Signal mit einem zugehörigen Kennungscode der gedrückten Drucktaste an den Sendeteil 9 sendet, und wobei der Funkempfänger (40, 50) einen Funksignal-Empfangsteil (11) aufweist, bestückt mit einer Antenne (10) und geeignet zum Empfang des von dem Funksender (30) über den Sendeteil (8) gesendeten Signals, und einen zweiten Mikrocontroller (12) mit einem zweiten Codespeicher (14), der bei jedem empfangenen Signal mit einem der Codes des zweiten Speichers (14) ein Steuersignal für eine Steuereinheit (18) erzeugt, die mit einem dritten Speicher (25) ausgestattet ist, der bei Empfang des Steuersignals den Motor in eine Drehrichtung oder in die entgegengesetzte Richtung nach Maßgabe der Identität der gedrückten Drucktaste des Radiosenders (30) startet und Kennungsdaten des Drehwinkels des Motors von einem mit diesem gekoppelten Codierer (21) empfängt, so daß die Drehung des Motors ermöglicht wird, bis eine vorab festgelegte Grenze erreicht ist, **dadurch gekennzeichnet, daß** der Funksender (30) eine weitere Drucktaste (5) aufweist, die an den ersten Mikrocontroller (6) angeschlossen ist, um ihn zu veranlassen, ein codiertes Funkempfänger-Freigabesignal zu erzeugen, und eine dritte und eine vierte Drucktaste (3, 4) aufweist, die an den ersten Mikrocontroller (6) angeschlossen sind, um ein weiteres codiertes Signal zur zentralisierten Steuerung einer Mehrzahl von Funkempfängern (40, 50) zu erzeugen.

11. Elektronisches Steuersystem nach Anspruch 10, **dadurch gekennzeichnet, daß** die zentralisierten Steuerdrucktasten (3, 4) und die Empfängerfreigabe-Drucktaste (5) an den ersten Mikrocontroller (6) angeschlossen sind, so daß das Niederdrücken der Empfängerfreigabe-Drucktaste (5) die Erzeugung des codierten Empfängerfreigabesignals veranlaßt, und ein anschließendes Niederdrücken einer von den beiden zentralisierten Steuerdrucktasten (3, 4) desselben Funksenders oder einer der beiden Anhebe- und Absenk-Steuerdrucktasten (1, 2) oder der beiden zentralisierten Steuertasten (3, 4) eines anderen Funksenders innerhalb eines vorab festgelegten Zeitintervalls die Erzeugung des genannten weiteren codierten Signals und das Abspeichern eines Kennungscodes für die niedergedrückte Drucktaste in dem zweiten Speicher (14) veranlaßt.

12. Elektronisches Steuersystem nach Anspruch 11, **dadurch gekennzeichnet, daß** das gleichzeitige Niederdrücken der Empfängerfreigabe-Drucktaste (5) mit einer vorab festgelegten Häufigkeit und das anschließende Niederdrücken von einer der beiden zentralisierten Steuerdrucktasten (3, 4) desselben Funkempfängers oder von einer der beiden Anhebe- und Absenk-Steuerdrucktasten (1, 2) oder der beiden zentralisierten Steuertasten (3, 4) eines anderen Funksenders innerhalb des vorab festgelegten Zeitintervalis die Erzeugung eines zusätzlichen codierten Signals für den zweiten Mikrocontroller (12) veranlaßt, damit er den Kennungscode für die niedergedrückte Drucktaste in dem zweiten Speicher (14) löscht.

13. Elektronisches Steuersystem nach einem der vorhergehenden Ansprüche, **dadurch gekennzeichnet, daß** der Funkempfänger (40, 50) eine Löschtaste (15) zum manuellen Löschen des zweiten Speichers (14) aufweist.

14. Elektronisches Steuersystem nach einem der vorhergehenden Ansprüche, **dadurch gekennzeichnet, daß** der Funkempfänger (40, 50) eine Verstärkerstufe (16) am Ausgang des zweiten Mikrocontrollers (12) aufweist.

15. Elektronisches Steuersystem nach einem der vorhergehenden Ansprüche, **dadurch gekennzeichnet, daß** der Funkempfänger (40, 50) einen decodierenden Empfänger (17) aufweist, um die Steuersignale von dem zweiten Mikrocontroller (12) zu empfangen und sie korrekt dekodiert an die Steuereinheit (18) zu senden.

16. Elektronisches Steuersystem nach einem der vorhergehenden Ansprüche, **dadurch gekennzeichnet, daß** der Funkempfänger (40, 50) einen Gleichrichter (22) und einen stromabwärts von diesem angeordneten Stabilisierer (23) enthält.

17. Elektronisches Steuersystem nach einem der vorhergehenden Ansprüche, **dadurch gekennzeichnet, daß** es einen Tonsignalgeber (13) enthält, der in dem Funkempfänger (40, 50) enthalten ist, und von dem zweiten Mikrocontroller (12) gesteuert wird, um jedesmal dann einen vorab festgelegten Ton abzugeben, wenn der Mikrocontroller (12) über ein vorab festgelegtes Zeitintervall ein geeignet codiertes Signal empfängt.

## Revendications

1. Système de commande électronique pour moteurs servant à l'actionnement de dispositifs à enroulement, tels que stores, portails roulants, volets roulants et analogues, comprenant un récepteur radio (40, 50) compris dans le moteur commandé et un émetteur radio portatif (30) à disposition de l'utilisateur, dans lequel ledit émetteur radio (30) comprend au moins deux boutons (1, 2) pour la commande des mouvements de levée et d'abaissement du dispositif à enroulement, une section d'émission (8) de signaux radio munie d'une antenne (9), et un premier microcontrôleur (6) avec une première mémoire de code (7) qui, à chaque pression exercée sur au moins l'un desdits boutons de commande (1, 2), envoie un signal codé ayant un code d'identification respectif du bouton actionné à ladite section d'émission (8), et dans lequel ledit récepteur radio (40, 50) comprend une section de réception (11) de signaux radio munie d'une antenne (10) et adaptée pour recevoir le signal codé émis par ledit émetteur radio (30) via ladite section d'émission (8), et un deuxième microcontrôleur (12) avec une deuxième mémoire de code (14), qui à chaque signal reçu ayant l'un des codes de ladite deuxième mémoire (14) produit un signal de commande pour un module de commande (18) muni d'une troisième mémoire (25) qui, lors de la réception dudit signal de commande, fait tourner ledit moteur dans un sens de rotation ou dans le sens inverse en fonction de l'identité du bouton dudit émetteur radio (30) qui est actionné et reçoit des données d'identification de l'angle de rotation du moteur provenant d'un codeur (21) accouplé au moteur, de façon à permettre la rotation du moteur jusqu'à ce qu'une butée de fin de course préétablie soit atteinte, **caractérisé en ce que**, pour permettre le réglage électronique de la position des butées de fin de course de levée et d'abaissement du dispositif à enroulement, ledit premier microcontrôleur (6) est programmé de façon à produire un premier ou un deuxième signal codé en fonction de quel bouton de commande, parmi un premier (1) et un deuxième (2) bouton de commande, est actionné, et ledit deuxième microcontrôleur (12) est adapté pour, lorsqu'il reçoit l'un desdits premier et deuxième signaux codés, déclencher la production d'un premier signal de commande pour entraîner le moteur jusqu'à ce qu'une première position de butée de fin de course soit atteinte et une information sur la position de butée de fin de course produite par ledit codeur (21) est mémorisée dans ladite troisième mémoire (25) et associée au bouton actionné qui a produit ledit signal codé, de telle sorte qu'ensuite, à chaque fois que ce bouton est actionné, ledit système est prêt pour faire exécuter automatiquement au dispositif à enroulement le mouvement souhaité jusqu'à la position de butée de fin de course programmée, la séquence susmentionnée étant répétée pour l'établissement d'une deuxième position de butée de fin de course correspondant à l'actionnement de l'autre desdits premier et deuxième boutons (1, 2).

2. Système de commande électronique selon la revendication 1, **caractérisé en ce que** ledit premier microcontrôleur (6) est programmé de façon qu'un troisième signal codé produit initialement par l'actionnement simultané desdits premier et deuxième boutons (1, 2) et maintenu pendant ledit premier intervalle de temps préétabli oblige ledit microcontrôleur (6) à produire un signal de mise à zéro pour ladite troisième mémoire (25) et la répétition dudit troisième signal codé pendant un deuxième intervalle de temps préétabli après que ledit premier ou deuxième signal codé suivi par la répétition dudit premier ou deuxième signal codé pendant un troisième intervalle de temps préétabli oblige ledit premier microcontrôleur (6) à produire un deuxième signal de commande pour que ledit deuxième microcontrôleur (12) mémorise ladite information sur la position de butée de fin de course produite par le codeur (21) dans ladite troisième mémoire (25).

3. Système de commande électronique selon la revendication 1 ou 2, **caractérisé en ce que** ledit émetteur radio (30) comprend également au moins deux boutons de commande centralisés (3, 4) et un bouton de validation de récepteur (5) qui sont reliés audit premier microcontrôleur (6) de sorte que l'actionnement dudit bouton de validation de récepteur (5) et l'actionnement subséquent de l'un des deux boutons de commande centralisés (3, 4) du même émetteur radio ou de l'un des deux boutons de commande de levée et d'abaissement (1, 2) ou d'un des deux boutons de commande centralisés (3, 4) d'un autre émetteur radio dans un quatrième intervalle de temps préétabli provoque la production d'un signal codé supplémentaire pour que ledit deuxième microcontrôleur (12) mémorise un code d'identification du bouton actionné dans ladite deuxième mémoire (14).

4. Système de commande électronique selon la revendication 3, **caractérisé en ce que** l'actionnement simultané dudit bouton de validation de récepteur (5) un nombre de fois préétabli et l'actionnement subséquent d'un des deux boutons de commande centralisés (3, 4) du même émetteur radio ou de l'un des deux boutons de commande de levée et d'abaissement (1, 2) ou d'un des deux boutons de commande centralisés (3, 4) d'un autre émetteur radio dans un quatrième intervalle de temps préétabli provoque la production d'un signal codé supplémentaire pour que ledit deuxième microcontrôleur (12) efface le code d'identification du bouton actionné dans ladite deuxième mémoire (14).

5. Système de commande électronique selon l'une quelconque des revendications précédentes, **caractérisé en ce que** ledit récepteur radio (40, 50) comprend un bouton d'effacement (15) pour permettre l'effacement manuel de ladite deuxième mémoire (14).

6. Système de commande électronique selon l'une quelconque des revendications précédentes, **caractérisé en ce que** ledit récepteur radio (40, 50) comprend un étage amplificateur (16) à la sortie dudit deuxième microcontrôleur (12).

7. Système de commande électronique selon l'une quelconque des revendications précédentes, **caractérisé en ce que** ledit récepteur radio (40, 50) comprend un récepteur décodeur (17) pour recevoir lesdits signaux de commande provenant dudit deuxième microcontrôleur (12) et pour les envoyer correctement décodés audit module de commande (18).

8. Système de commande électronique selon l'une quelconque des revendications précédentes, **caractérisé en ce que** ledit récepteur radio (40, 50) comprend un redresseur (22) et un stabilisateur (23), en aval de celui-ci, qui fournissent une alimentation électrique appropriée au récepteur radio (40, 50).

9. Système de commande électronique selon l'une quelconque des revendications précédentes, **caractérisé en ce que** ledit récepteur radio (40, 50) comprend un signaleur sonore (13) et commandé par ledit deuxième microcontrôleur (12) pour délivrer un son préétabli à chaque fois que ledit microcontrôleur (12) reçoit un signal codé adapté pendant un intervalle de temps préétabli.

10. Système de commande électronique pour moteurs servant à l'actionnement de dispositifs à enroulement, tels que stores, portails roulants, volets roulants et analogues, comprenant un récepteur radio (40, 50) compris dans le moteur commandé et un émetteur radio portatif (30) à disposition de l'utilisateur, dans lequel ledit émetteur radio (30) comprend au moins deux boutons (1, 2) pour la commande des mouvements de levée et d'abaissement du dispositif à enroulement, une section d'émission (8) de signaux radio munie d'une antenne (9), et un premier microcontrôleur (6) avec une première mémoire de code (7) qui, à chaque pression exercée sur au moins l'un desdits boutons de commande (1, 2), envoie un signal codé ayant un code d'identification respectif du bouton actionné à ladite section d'émission (8), et dans lequel ledit récepteur radio (40, 50) comprend une section de réception (11) de signaux radio munie d'une antenne (10) et adaptée pour recevoir le signal codé émis par ledit émetteur radio (30) via ladite section d'émission (8), et un deuxième microcontrôleur (12) avec une deuxième mémoire de code (14), qui à chaque signal reçu ayant l'un des codes de ladite deuxième mémoire (14) produit un signal de commande pour un module de commande (18) muni d'une troisième mémoire (25) qui, lors de la réception dudit signal de commande, fait tourner ledit moteur dans un sens de rotation ou dans le sens inverse en fonction de l'identité du bouton dudit émetteur radio (30) qui est actionné et reçoit des données d'identification de l'angle de rotation du moteur provenant d'un codeur (21) accouplé au moteur, de façon à permettre la rotation du moteur jusqu'à ce qu'une butée de fin de course préétablie soit atteinte, **caractérisé en ce que** l'émetteur radio (30) comprend un bouton supplémentaire (5) relié au premier microcontrôleur (6) pour lui faire produire un signal codé de validation de récepteur radio et des troisième et quatrième boutons (3, 4) reliés au premier microcontrôleur (6) pour produire un signal codé supplémentaire pour la commande centralisée d'une pluralité de récepteurs radio (40, 50).

11. Système de commande électronique selon la revendication 10, **caractérisé en ce que** lesdits boutons de commande centralisés (3, 4) et ledit bouton de validation de récepteur (5) sont reliés audit premier microcontrôleur (6) de telle manière que l'actionnement dudit bouton de validation de récepteur (5) provoque la production dudit signal codé de validation de récepteur et l'actionnement subséquent de l'un des deux boutons de commande centralisés (3, 4) du même émetteur radio ou de l'un des deux boutons de commande de levée et d'abaissement (1, 2) ou d'un des deux boutons de commande centralisés (3, 4) d'un autre émetteur radio dans un intervalle de temps préétabli provoque la production dudit signal codé supplémentaire et la mémorisation d'un code d'identification du bouton actionné dans ladite deuxième mémoire (14).

12. Système de commande électronique selon la revendication 10, **caractérisé en ce que** l'actionnement simultané dudit bouton de validation de récepteur (5) un nombre de fois préétabli et l'actionnement subséquent d'un des deux boutons de commande centralisés (3, 4) du même émetteur radio ou de l'un des deux boutons de commande de levée et d'abaissement (1, 2) ou d'un des deux boutons de commande centralisés (3, 4) d'un autre émetteur radio dans ledit intervalle de temps préétabli provoque la production d'un signal codé supplémentaire pour que ledit deuxième microcontrôleur (12) efface le code d'identification du bouton actionné dans ladite deuxième mémoire (14).

13. Système de commande électronique selon l'une quelconque des revendications précédentes, **caractérisé en ce que** ledit récepteur radio (40, 50) comprend un bouton d'effacement (15) pour permettre l'effacement manuel de ladite deuxième mémoire (14).

14. Système de commande électronique selon l'une quelconque des revendications précédentes, **caractérisé en ce que** ledit récepteur radio (40, 50) comprend un étage amplificateur (16) placé à la sortie dudit deuxième microcontrôleur (12).

15. Système de commande électronique selon l'une quelconque des revendications précédentes, **caractérisé en ce que** ledit récepteur radio (50) comprend un récepteur décodeur (17) pour recevoir lesdits signaux de commande provenant dudit deuxième microcontrôleur (12) et pour les envoyer correctement décodés audit module de commande (18).

16. Système de commande électronique selon l'une quelconque des revendications précédentes, **caractérisé en ce que** ledit récepteur radio (40, 50) comprend un redresseur (22) et un stabilisateur (23), en aval de celui-ci.

17. Système de commande électronique selon l'une quelconque des revendications précédentes, **caractérisé en ce qu'**il comprend un signaleur sonore (13) compris dans ledit récepteur radio (40, 50) et commandé par ledit deuxième microcontrôleur (12) pour délivrer un son préétabli à chaque fois que ledit microcontrôleur (12) reçoit un signal codé adapté pendant un intervalle de temps préétabli.
